# EUROPÄISCHE PATENTSCHRIFT

(11) **EP 3 026 244 B1**
(45) Veröffentlichungstag und Bekanntmachung des Hinweises auf die Patenterteilung: **29.03.2017**
(21) Anmeldenummer: 15002790.2
(22) Anmeldetag: 29.09.2015
(51) Int. Cl.: F02D 41/02, F01N 3/20, F02B 39/10, F02M 31/00, F02M 31/02, F02D 13/02, F02D 41/00, F02D 41/06

(54) **VERFAHREN ZUR KALTSTARTVORWÄRMUNG EINER AUFGELADENEN BRENNKRAFTMASCHINE UND/ODER EINER ABGASNACHBEHANDLUNGSEINRICHTUNG**
METHOD FOR COLD START PREHEATING A SUPERCHARGED COMBUSTION ENGINE, AND/OR OF AN EXHAUST GAS AFTER-TREATMENT DEVICE
PROCÉDÉ DE PRÉCHAUFFAGE DE DÉMARRAGE À FROID D'UN MOTEUR À COMBUSTION INTERNE CHARGÉ ET/OU D'UN DISPOSITIF DE POST-TRAITEMENT DES GAZ D'ÉCHAPPEMENT

(30) Priorität: 28.11.2014 DE 102014017676
(43) Veröffentlichungstag der Anmeldung: 01.06.2016
(73) Patentinhaber: MAN Truck & Bus AG, 80995 München (DE)
(72) Erfinder: Pappenheimer, Andreas, 91792 Ellingen (DE); Sommermann, Andreas, 91560 Heilsbronn (DE)
(74) Vertreter: v. Bezold & Partner Patentanwälte - PartG mbB

(56) Entgegenhaltungen:
- DE-A1-102010 027 220
- US-A- 5 704 323
- US-A1- 2003 051 466
- US-A1- 2010 263 639

## Beschreibung

Die Erfindung betrifft ein Verfahren zur Kaltstartvorwärmung einer aufgeladenen Brennkraftmaschine und/oder einer Abgasnachbehandlungseinrichtung einer aufgeladenen Brennkraftmaschine. Die Erfindung betrifft ferner ein Kraftfahrzeug, insbesondere ein Nutzfahrzeug, mit einer aufgeladenen Brennkraftmaschine, einer Abgasnachbehandlungseinrichtung und einer Vorrichtung zur Kaltstartvorwärmung der aufgeladenen Brennkraftmaschine und/oder einer Abgasnachbehandlungseinrichtung.

Aus der Praxis ist bekannt, dass die Schadstoffemission einer Brennkraftmaschine durch katalytische Nachbehandlung des Abgases mit Hilfe eines Abgasnachbehandlungssystems, z. B. aufweisend einen Abgaskatalysator, wirksam verringert werden kann. Eine wichtige Voraussetzung hierfür ist jedoch, dass der Katalysator seine Anspringtemperatur (Light-Off-Temperatur) erreicht hat. Unterhalb dieser Temperatur ist der Abgaskatalysator wenig bis unwirksam, und die Reaktion findet nur mit ungenügend kleinen Konvertierungsraten statt.

Bei Systemen mit Abgasturboaufladung ist aufgrund der Wärmesenke durch die Abgasturbine das emissionsoptimale Erreichen des Katalysator-Light-Offs kritisch. Bei Brennkraftmaschinen dieser Art ist es somit erforderlich, Vorkehrungen zu treffen, damit der Abgaskatalysator beim Kaltstart schnell seine Anspringtemperatur (Light-Off-Temperatur) erreicht.

Häufig werden Sekundärluftsysteme eingesetzt, um die Kaltstartemissionen zu begrenzen. Dabei wird beispielsweise mittels einer Sekundärluftpumpe während des Warmlaufs Sekundärluft nahe an den Auslassventilen eingeblasen. Durch die Reaktion der eingeblasenen Luft mit den in den heißen Abgasen enthaltenen unverbrannten Abgasbestandteilen und die weitere Oxidation im Katalysator wird dieser schneller aufgeheizt.

In der DE 44 41 164 A1 wird hierzu beispielsweise vorgeschlagen, die Ladeluft über eine Ladeluftleitung zur Brennkraftmaschine zu fördern und in dieser Ladeluftleitung eine Drosselklappe anzuordnen. Stromaufwärts der Drosselklappe und stromabwärts des Laders zweigt eine Umluftleitung zur Saugseite des Laders ab. In der Umluftleitung ist ein Umluftsteller angeordnet. Eine Verbindungsleitung führt von der Druckseite des Laders zu einer Abgasleitung der Brennkraftmaschine, wobei in dieser Verbindungsleitung ein mit einem Motorsteuergerät verbundenes Regelventil angeordnet ist.

Nachteilig an den zuvor bekannten Ansätzen ist, dass zusätzliche Bauteile, z. B. Sekundärluftpumpe, Umluftleitung, Umluftsteller, Drosselklappe etc., vorgesehen werden müssen.

Aus der Praxis sind ferner Kaltstarthilfen zum Vorwärmen der Verbrennungsluft bekannt, z. B. in Form einer Flammstarteinrichtung oder eines Glühstifts, die im Ansaugluftkanal der Verbrennungseinrichtung angeordnet sind. Eine derartige Kaltstarthilfe dient insbesondere dazu, einen Kaltstart von Brennkraftmaschinen wie beispielsweise Dieselmotoren oder Ottomotoren mit und ohne Ladeluft zu ermöglichen. Sie wird insbesondere bei Dieselmotoren wie beispielsweise direkt einspritzenden Dieselmotoren für den LKW-Einsatz verwendet, um bei tiefen Temperaturen von beispielsweise unter -10° C einen sicheren Start des Motors zu gewährleisten. Nachteilig an diesen Kaltstarthilfen ist, dass die Erwärmungswirkung auf die Ladelufttemperatur beschränkt ist und keine Aufwärmung der Zylinder oder der Abgasnachbehandlungseinrichtung erfolgt.

Die US2010/263639 A1 offenbart eine weitere Kaltstartvorwärmung für eine Brennkraftmaschine mit einem Abgasnachbehandlungssystem.

Es ist somit eine Aufgabe der Erfindung, ein verbessertes Verfahren zur Kaltstartvorwärmung einer aufgeladenen Brennkraftmaschine und/oder einer Abgasnachbehandlungseinrichtung bereitzustellen, mit dem Nachteile herkömmlicher Techniken vermieden werden können.

Diese Aufgaben werden durch ein Verfahren mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein Verfahren zur Kaltstartvorwärmung einer aufgeladenen Brennkraftmaschine und/oder einer Abgasnachbehandlungseinrichtung der aufgeladenen Brennkraftmaschine vorgeschlagen. Das Verfahren betrifft insbesondere ein Verfahren zur Kaltstartvorwärmung bei Motorstillstand bzw. ein Verfahren zur Kaltstartvorwärmung unmittelbar vor oder bei Durchführung eines Kaltstarts einer aufgeladenen Brennkraftmaschine.

Hierbei ist in Übereinstimmung mit dem Stand der Technik zum Erwärmen der Ladeluft bei Motorstillstand eine Kaltstarthilfe im Ansaugkanal angeordnet. Die Kaltstarthilfe kann eine Flammstarteinrichtung oder eine Glühvorrichtung wie z. B. ein Glühstift oder Glühgitter sein. Die Brennkraftmaschine ist mit einer elektromotorisch betreibbaren Aufladeeinrichtung aufladbar und somit auch bei Motorstillstand bzw. bei nicht gezündeter Brennkraftmaschine aufladbar. Ferner umfasst die Brennkraftmaschine wenigstens einen Arbeitszylinder, welcher jeweils wenigstens ein Einlassventil, das mit dem Ansaugkanal in Verbindung steht, und wenigstens ein Auslassventil, das mit einer Abgasanlage in Verbindung steht, aufweist. Ferner ist eine Einrichtung zum Einstellen einer Ventilstellung vorgesehen. Die Einrichtung kann die Ventilstellung durch Drehen der Kurbelwelle und/oder, falls vorhanden, durch das Ansteuern eines Nockenwellen-Phasenstellers einstellen.

Bei dem Verfahren zur Kaltstartvorwärmung werden nach Erkennen eines Kaltstarts der Brennkraftmaschine die folgenden Schritte durchgeführt: Aktivieren der Kaltstarthilfe im Motorstillstand, Aktivieren eines elektromotorischen Betriebs der Aufladeeinrichtung und Einstellen einer Ventilüberschneidung und/oder einer Ladungswechselstellung zwischen wenigstens einem Einlassventil und wenigstens einem Auslassventil eines Arbeitszylinders, um zumindest einen Teil der von der Aufladeeinrichtung geförderten Ladeluft direkt in die Abgasanlage zu fördern. Unter einer direkten Förderung der Ladeluft in die Abgasanlage wird eine Förderung der erwärmten Ladeluft in die Abgasanlage unter Spülung eines Arbeitszylinders und ohne Zündvorgang verstanden. Hierbei ist keine bestimmte Reihenfolge der drei vorgenannten Schritte erforderlich. Diese können nacheinander oder zeitgleich gestartet werden.

Der elektromotorische Betrieb der Aufladeeinrichtung ermöglicht, dass trotzt Motorstillstand bzw. auch ohne Turbinenenergie aus der Verbrennungsluft der Brennkraftmaschine Ladeluft zur Brennkraftmaschine gefördert und durch die aktivierte Kaltstarthilfe erhitzt werden kann. Das Einstellen der Ventilüberschneidung zwischen wenigstens einem Einlassventil und wenigstens einem Auslassventil eines Arbeitszylinders bewirkt, dass die erhitzte Ladeluft in den entsprechenden Arbeitszylinder mit Ventilüberschneidung einströmt und über das Auslassventil zur Abgasseite gespült wird. Bei der Ventilüberschneidung sind das Einlassventil und das Auslassventil gleichzeitig zumindest teilweise geöffnet, so dass ein Spülvorgang von über das Einlassventil eintretender Ladeluft in die Abgasanlage stattfindet. Dadurch wird einerseits der Arbeitszylinder und andererseits das Abgasnachbehandlungssystem, insbesondere der Abgasnachbehandlungskatalysator, vorgewärmt. Es kann somit auf eine zusätzliche Umluftleitung zur Saugseite des Laders oder auf zusätzliche Sekundärpumpen verzichtet werden.

Nach einer Phase der Vorwärmung, z. B. nach einer vorbestimmten Zeit, kann dann die Starterbetätigung erfolgen, um den Motor zu starten. Durch den oder die vorerwärmten Zylinder zeigt die Brennkraftmaschine ein besseres Zündverhalten bzw. Startverhalten. Durch die vorerwärmte Abgasnachbehandlungseinrichtung wird die Light-Off-Temperatur schneller erreicht und die Schadstoffemission reduziert.

Die elektromotorisch betreibbare Aufladeeinrichtung ist hierbei vorzugsweise als ein elektromotorisch unterstützter Abgasturbolader ausgeführt. Derartige elektromotorisch unterstützte Abgasturbolader sind an sich ebenfalls aus dem Stand der Technik bekannt und weisen einen elektrisch angetriebenen Strömungsverdichter auf. Hierbei kann mithilfe eines Elektromotors im Transientbetrieb, z. B. während des verzögerten Druckaufbaus bei niedrigen Drehzahlen, zeitlich befristet Hilfsenergie zugeführt werden. Ein besonderer Vorteil liegt somit darin, dass der Abgasturbolader auch zur Erwärmung der Arbeitszylinder und der Abgasnachbehandlungseinrichtung genutzt werden kann, so dass keine zusätzlichen Pumpen oder elektrischen Verdichter vonnöten sind. Ein weiterer Vorteil ist, dass die mitdrehende Turbine des Abgasturboladers den Heißlufttransport zum Abgasnachbehandlungssystem unterstützt.

Im Rahmen der Erfindung besteht jedoch auch die Möglichkeit, dass statt eines elektromotorisch unterstützten Abgasturboladers ein elektrischer Verdichter vorgesehen ist, der nur elektrisch und nicht über eine von der Strömungsenergie des Abgases angetriebene Turbine angetrieben ist.

Die Einrichtung zum Einstellen der Ventilstellung kann ausgebildet sein, wenigstens eine vorbestimmte,Winkelposition der Kurbelwelle einzustellen, die durch Mitdrehen der Nockenwelle die Ventilüberschneidung erzeugt und die zum Einstellen der Kurbelwellenwinkelposition einen Startermotor der Brennkraftmaschine oder einen Kurbelwellenstartergenerator ansteuert. Ferner kann die Einrichtung zum Einstellen der Ventilstellung auch ausgebildet sein, mittels eines Phasenstellers der Nockenwelle, falls vorhanden, die Nockenwellen derart zu verdrehen, dass eine größere Ventilüberschneidung eingestellt wird.

Hierbei besteht im Rahmen der Erfindung die Möglichkeit, dass im Schritt der Einstellung der Ventilüberschneidung die Ventilüberschneidung und/oder die Ladungswechselstellung nacheinander für jeweils den oder die beim Anlassvorgang nächstzündenden Arbeitszylinder eingestellt wird. Dies bietet den Vorteil, dass der beim Kaltstartvorgang nächstzündende Zylinder gezielt vorgewärmt wird.

Eine Möglichkeit der erfindungsgemäßen Realisierung sieht bei einer Brennkraftmaschine, die als Reihensechszylinder ausgeführt ist, vor, dass im Schritt der Einstellung der Ventilüberschneidung die Kurbelwelle nacheinander dreimal oder mehrmals um jeweils um 120° gedreht wird, um jeweils einen von zwei gleichlaufenden Arbeitszylindern auf den oberen Ladungswechsel-Totpunkt einzustellen. Dadurch sind bei einem anschließenden Anlassvorgang die nächstzündenden Arbeitszylinder bereits vorgeheizt.

Ferner besteht die Möglichkeit, dass der Ventiltrieb nicht über die Nockenwelle erfolgt, sondern dass der Ventiltrieb der Brennkraftmaschine als elektromagnetischer Ventiltrieb ausgeführt ist, der von der Einrichtung zum Einstellen der Ventilstellung angesteuert wird, um die Ventilüberschneidung einzustellen. Ferner besteht auch hier wiederum die Möglichkeit, mittels eines Phasenstellers die Nockenwelle zu verdrehen, um eine größere Ventilüberschneidung einzustellen.

I n einer weiteren Variante der Erfindung erfolgt im Schritt der Einstellung der Ventilüberschneidung eine langsame kontinuierliche Kurbelwellendrehung bei Motorstillstand. Die kontinuierliche Kurbelwellendrehung erzeugt ebenfalls nacheinander Ventilüberschneidungen, so dass zumindest ein Teil der von der Aufladeeinrichtung geförderten Ladeluft direkt in die Abgasanlage befördert wird.

Gemäß einer bevorzugten Ausgestaltungsform arbeitet die Brennkraftmaschine selbstzündend und ist insbesondere ein Dieselmotor.

Das Vorliegen eines Kaltstartvorgangs kann beispielsweise festgestellt werden, wenn die Kühlmitteltemperatur oder die Ansauglufttemperatur beim Start der Brennkraftmaschine einen Schwellenwert unterschreitet.

Die Erfindung betrifft ferner ein Kraftfahrzeug, vorzugsweise ein Nutzfahrzeug, umfassend eine Abgasnachbehandlungseinrichtung; eine im Ansaugkanal angeordnete Kaltstarthilfe zum Erwärmen der Ladeluft bei Motorstillstand; eine aufgeladene, vorzugsweise selbstzündende Brennkraftmaschine, aufweisend wenigstens einen Arbeitszylinder, welcher jeweils wenigstens ein Einlassventil, das mit dem Ansaugkanal in Verbindung steht, und wenigstens ein Auslassventil, das mit einer Abgasanlage in Verbindung steht, aufweist; eine elektromotorisch betreibbare Aufladeeinrichtung zum Aufladen der Brennkraftmaschine; und eine Einrichtung zum Einstellen einer Ventilstellung der Arbeitszylinder der Brennkraftmaschine. Gemäß allgemeinen Gesichtspunkten der Erfindung umfasst das Kraftfahrzeug ferner eine Steuereinrichtung zur Kaltstartvorwärmung der aufgeladenen Brennkraftmaschine und/oder der Abgasnachbehandlungseinrichtung bei Motorstillstand, die eingerichtet ist, das Verfahren wie hierin offenbart durchzuführen.

Zur Vermeidung von Wiederholungen sollen rein verfahrensgemäß offenbarte Merkmale auch als vorrichtungsgemäß offenbart gelten und beanspruchbar sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockschaltbild einer Brennkraftmaschine mit elektromotorisch unterstütztem Abgasturbolader;
- Figur 2: ein Ablaufdiagramm des Verfahrens zur Kaltstartvorwärmung gemäß einer Ausführungsform der Erfindung; und
- Figur 3A, 3B und 3C: beispielhaft die Ansteuerung der Kurbelwelle zur Einstellung der Ventilüberschneidung für einen Reihensechszylindermotor gemäß einer Ausführungsform der Erfindung.

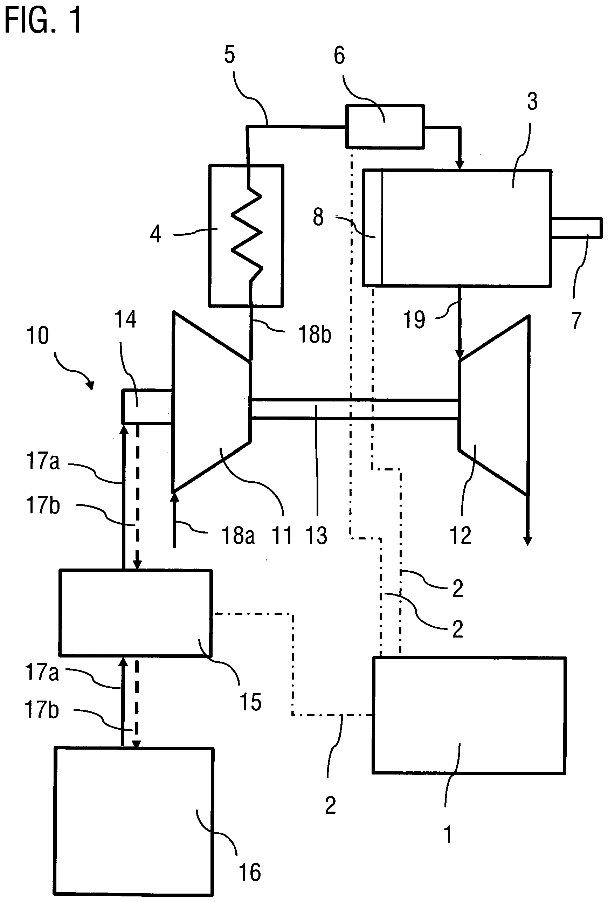

In Figur 1 ist in Form eines Blockschaltbildes eine aufgeladene Diesel-Brennkraftmaschine 3 eines Nutzfahrzeugs und ein ihr zugeordneter elektromotorisch unterstützter Abgasturbolader (ATL) 10 gezeigt. Dabei sind nur diejenigen Komponenten dargestellt, die für das Verständnis der Erfindung notwendig sind. Insbesondere ist auf die Darstellung der Abgasnachbehandlungseinrichtung, der Zündanlage, des Kraftstoffkreises und des Kühlkreislaufes verzichtet worden, die jeweils in an sich bekannter Weise ausgeführt sind.

Der elektromotorisch unterstützte Abgasturbolader 10 umfasst eine Turbine 12, die von einem Abgas der Brennkraftmaschine 3, das der Turbine über die Abgasleitung 19 zugeführt wird, angetrieben wird. Die Turbine 12 ist üblicherweise durch eine Welle 13 mit einem Verdichter 11 verbunden, wobei der Verdichter 11 eine der Brennkraftmaschine 3 zuzuführende Ladeluft verdichtet und somit die Leistung der Brennkraftmaschine 3 steigert.

Der ATL 10 ist als elektromotorisch unterstützter Abgasturbolader ausgeführt. Die Besonderheit dieser Ausführungsform liegt unter anderem darin, dass der elektromotorische Antrieb des Strömungsverdichters 11 durch einen kleinen Elektromotor 14, der in das Verdichtergehäuse des Verdichters 11 integriert wurde, realisiert ist. Der Elektromotor 14 kann sowohl motorisch als auch generatorisch betrieben werden und wird hierzu von einer Steuereinrichtung 15 gesteuert, die ferner mit einem elektrischen Energiespeicher 16 verbunden ist. Über die Leistungselektronik der Steuereinrichtung 15 kann Energie aus dem Energiespeicher 16 dem Elektromotor 14 bereitgestellt werden, dargestellt durch die durchgezogenen Linien 17a, oder rekuperierte Energie aus dem ATL-Betrieb dem Energiespeicher 16 zugeführt werden, dargestellt durch die gestrichelten Linien 17b. Der Abgasturbolader 10 ist an sich aus dem Stand der Technik bekannt und beispielsweise in der Ausgabe 3/2014 der Zeitschrift "MTZ - Motortechnische Zeitschrift" auf den Seiten 50-55 beschrieben. Es wird betont, dass auch andere konstruktive Ausgestaltungen eines elektromotorisch unterstützten Abgasturboladers im Rahmen der Erfindung verwendet werden können.

Über einen Ansaugkanal 18a erhält die Brennkraftmaschine 10 die zur Verbrennung notwendige Frischluft. Die Frischluft wird zuvor in dem Verdichter 11 verdichtet und im vorliegenden Ausführungsbeispiel über die Ladeluftleitung 18b einem Ladeluftkühler 4 und anschließend über die Ladeluftleitung 5 der Brennkraftmaschine 3 zugeführt. In der Ladeluftleitung 5 oder dem Ansaugkanal 18a ist ferner eine Flammstarteinrichtung 6 angeordnet, mittels der die Ladeluft bei einem Kaltstart erhitzt werden kann. Vorstehend wurde bereits erwähnt, dass statt der Flammstarteinrichtung 6 auch ein Glühstift verwendet werden kann.

Zum Starten der Brennkraftmaschine kann ein konventioneller Starter vorgesehen sein, der zum Start der Brennkraftmaschine mit seinem Anlasserritzel in ein mit der Kurbelwelle drehfest gekoppeltes Anlasserzahnrad eingreift und dieses antreibt. Alternativ, wie in Figur 1 stark schematisiert dargestellt, kann zum Starten der Brennkraftmaschine eine sowohl motorisch als auch generatorisch betreibbare elektrische Maschine in Form eines elektrischen Kurbelwellenstartergenerators (KSG) 8 vorgesehen sein, die üblicherweise koaxial zur Kurbelwelle 7 und zwischen Brennkraftmaschine 3 und Getriebe (nicht dargestellt) angeordnet ist. Hierbei steht der KSG 8 in Wirkverbindung mit der Kurbelwelle 7, beispielsweise indem der Rotor des KSGs 8 im montierten Zustand mit einem auf der Kurbelwelle 7 angeordneten Schwungrad drehfest in Verbindung steht. Der KSG 8 wird ferner zum Einstellen der Ventilstellung im Rahmen der Kaltstartvorwärmung verwendet, was nachfolgend noch erläutert wird.

Ferner ist eine weitere Steuereinrichtung 1 dargestellt, die beispielsweise als Teil der Motorsteuerung ausgeführt sein kann. Die Steuereinrichtung ist eingerichtet, über entsprechende Steuerleitungen 2 den ATL 10, die Flammstarteinrichtung 6 und den KSG 8 (oder den konventionellen Starter) im Rahmen des Verfahrens zur Kaltstartvorwärmung anzusteuern.

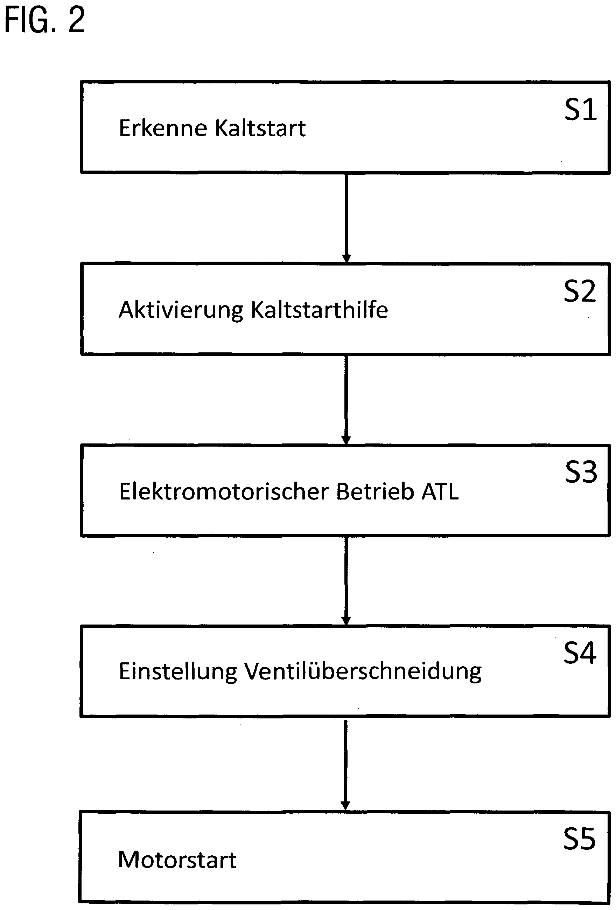

Figur 2 zeigt ein Ablaufdiagramm des Verfahrens zur Kaltstartvorwärmung gemäß einer Ausführungsform der Erfindung.

Vor Durchführung der Kaltstarterwärmung wird ermittelt, ob ein Kaltstart des Fahrzeugs bevorsteht. Das Vorliegen eines Kaltstartvorgangs kann mit den aus den Stand der Technik bekannten Ansätzen ermittelt werden. Typischerweise kann ein Kaltstartvorgang von einem Warmstartvorgang anhand der Kühlmitteltemperatur unterschieden werden. Unterschreitet beispielsweise die Kühlmitteltemperatur beim Start der Brennkraftmaschine einen vorgegebenen Schwellenwert, liegt ein Kaltstart vor. Der Schwellenwert wird experimentell ermittelt und ist in der Speichereinrichtung 1 abgelegt.

Wird ein Kaltstart der Brennkraftmaschine 3 erkannt (Schritt S1), werden die folgenden Schritte durchgeführt. In Schritt S2 wird die Flammstarteinrichtung 6 von der Steuereinrichtung 1 aktiviert. Ferner steuert die Steuereinrichtung 1 die Steuerung 15 des ATLs 10 in Schritt S3 an, um den elektromotorischen Betrieb des ATLs 10 zu aktivieren. Der Verdichter 11 wird somit elektrisch angetrieben und fördert Ladeluft zur Flammstarteinrichtung 6, wodurch diese erwärmt wird.

In Schritt S4 werden die Ein- und Auslassventile (nicht dargestellt) eines oder mehrerer Zylinder der Brennkraftmaschine 3 auf Ventilüberschneidung eingestellt. Hierzu ist die Steuereinrichtung 1 programmtechnisch so eingerichtet, dass sie in Reaktion auf die Erkennung des Kaltstarts in Schritt S1 den Rotor des KSGs 8 derart bestromt, dass dieser automatisch in eine vorbestimmte Verdrehstellung relativ zum Stator des KSGs verfährt. Die vorbestimmte Verdrehstellung des Rotors korrespondiert dabei mit einer vorbestimmten Verdrehstellung, d. h. der Winkelposition der Kurbelwelle 7 und damit der Nockenwelle oder allgemein des Ventiltriebs, bei der zumindest ein Einlassventil und zumindest ein Auslassventil zumindest eines Zylinders der Brennkraftmaschine 3 auf Ventilüberschneidung eingestellt werden. Die vorbestimmte Verdrehstellung des Rotors ist in einem Speicher der Steuereinrichtung 1 hinterlegt und wurde zuvor z. B. experimentell bestimmt.

Mittels eines induktiv oder kapazitiv arbeitenden und an sich bekannten Lagegebers (nicht dargestellt) wurde zuvor die aktuelle Verdrehstellung des Rotors zum Stator des KSGs und damit der Kurbelwelle 7 ermittelt. Aus der Praxis ist beispielsweise bekannt, die Erfassung der Verdrehstellung von Rotor zu Stator mittels eines zusätzlichen becherförmigen oder topfförmigen Bauteils (nicht dargestellt) zu ermöglichen, das drehfest am Schwungrad befestigt ist. Auf dem Bauteil ist eine spezielle Geometrie oder Markierung (Geberspur) angebracht, die mittels eines induktiv oder kapazitiv arbeitenden Sensors des Lagegebers abgegriffen wird, um die Verdrehstellung der Geberspur und damit des Rotors zu bestimmen. Die Steuereinrichtung 1 berechnet durch Bildung der Differenz aus vorbestimmter Drehstellung minus aktueller Drehstellung die erforderliche Drehung des Rotors, um die vorbestimmte Verdrehstellung für die Ventilüberschneidung einzunehmen.

Nach Einstellen der Ventilüberschneidung wird zumindest ein Teil der von dem elektromotorisch angetriebenen Verdichter 11 geförderten Ladeluft über ein offenes Einlassventil und ein offenes Auslassventil direkt in die Abgasanlage bei Motorstillstand gefördert. Der elektromotorische Betrieb des ATLs 10 ermöglicht somit, dass trotz Motorstillstand bzw. ohne Turbinenenergie aus der Verbrennungsluft der Brennkraftmaschine Ladeluft zur Brennkraftmaschine gefördert und durch die aktivierte Kaltstarthilfe 6 erhitzt werden kann. Das Einstellen der Ventilüberschneidung und/oder einer Ladungswechselstellung zwischen wenigstens einem Einlassventil und wenigstens einem Auslassventil eines Arbeitszylinders bewirkt, dass die erhitzte Ladeluft in den entsprechenden Arbeitszylinder mit Ventilüberschneidung einströmt und über das Auslassventil zur Abgasseite gespült wird. Dadurch wird einerseits der Arbeitszylinder und andererseits das Abgasnachbehandlungssystem, insbesondere der Abgasnachbehandlungskatalysator, vorgewärmt.

Anschließend erfolgt in Schritt S5 der Motorstart der Brennkraftmaschine 3.

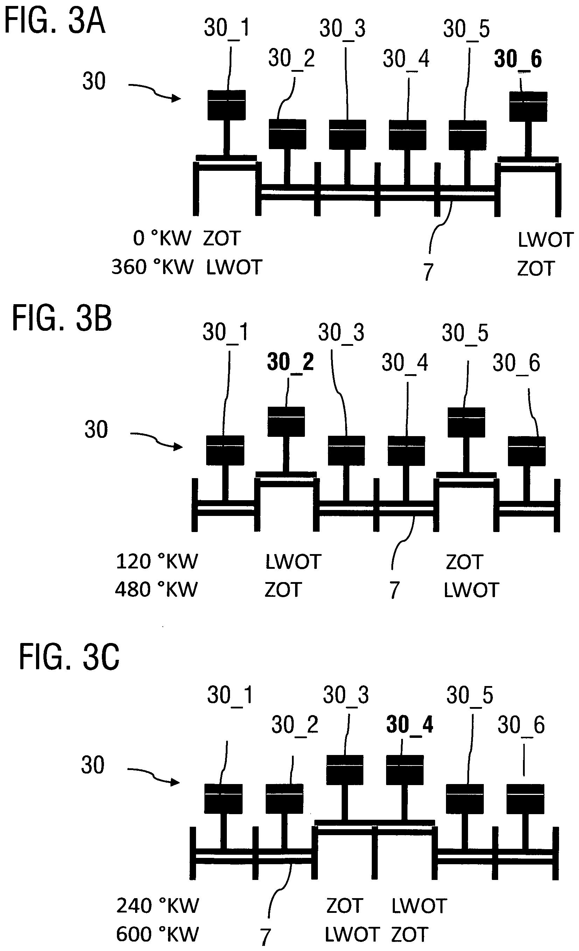

Die Figuren 3A, 3B und 3C illustrieren beispielhaft die Ansteuerung der Kurbelwelle 7 zur Einstellung der Ventilüberschneidung für einen Reihensechszylindermotor gemäß einer Ausführungsform der Erfindung. Die einzelnen Zylinder 30 sind mit den Bezugszeichen 30_1 bis 30_6 bezeichnet.

Gemäß dieser Ausführungsvariante wird in Schritt S4 der Einstellung der Ventilüberschneidung die Kurbelwelle (KW) 7 bei Motorstillstand nacheinander dreimal um jeweils um 120° gedreht, um jeweils einen von zwei gleichlaufenden und beim Anlassvorgang nächstzündenden Arbeitszylindern 30 auf den Ladungswechsel-OT (LWOT, OT = oberer Totpunkt) einzustellen.

Figur 3A zeigt eine erste Verdrehstellung 0° der Kurbelwelle 8, in der die Kolben der Zylinder 30_1 und 30_6 in der oberen Totpunktlage (OT) sind, wobei der erste Zylinder 30_1 in der Stellung Zünd-OT (ZOT, zwischen Kompressions- und Arbeitstakt) und der sechste Zylinder 30_6 in der Stellung Ladungswechsel-OT (LWOT, zwischen Ausstoß- und Ansaugtakt) ist.

Figur 3B zeigt eine nachfolgende Kurbelwellenposition, die von der Steuereinrichtung durch Ansteuerung des KSGs 8 in Schritt S4 um 120° weitergedreht wurde. Folglich ist jetzt der zweite Zylinder 30_2 im LWOT und der fünfte Zylinder im ZOT. Figur 3C zeigt eine dritte Kurbelwellenposition, wobei die Kurbelwelle 7 von der Steuereinrichtung 1 in Schritt S4 durch Ansteuerung des KSGs 8 um nochmals 120° weitergedreht wurde. Folglich ist jetzt der dritte Zylinder 30_3 im ZOT und der vierte Zylinder im LWOT.

In der LWOT-Stellung befinden sich das Einlassventil und das Auslassventil des entsprechenden Zylinders auf Ventilüberschneidung. Folglich werden nacheinander die Zylinder 30_6, 30_2 und dann 30_4 vorgeheizt. Beim anschließenden Anlassvorgang sind dies auch die nächstzündenden Zylinder 30, die bereits vorgeheizt sind, was ihr Zündverhalten verbessert.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Steuereinrichtung
- 2: Steuerleitung
- 3: Brennkraftmaschine
- 4: Ladeluftkühler
- 5: Ladeluftleitung
- 6: Flammstarteinrichtung
- 7: Kurbelwelle
- 8: Kurbelwellenstartergenerator
- 10: Elektromotorisch betreibbarer Abgasturbolader
- 11: Verdichter
- 12: Turbine
- 13: Welle
- 14: Elektromotor
- 15: Steuerung des Abgasturboladers
- 16: Elektrischer Energiespeicher
- 17a, 17b: Leitungen zur Energieübertragung
- 18a: Ladeluftkanal
- 18b: Ladeluftleitung
- 19: Abgasleitung
- 30, 30_1 bis 30_6: Arbeitszylinder
- LWOT: Ladungswechsel-OT, OT = oberer Totpunkt
- ZOT: Zünd-OT, OT = oberer Totpunkt

## Patentansprüche

1. Verfahren zur Kaltstartvorwärmung einer aufgeladenen Brennkraftmaschine (3) und/oder einer Abgasnachbehandlungseinrichtung eines Fahrzeugs,
wobei zum Erwärmen der Ladeluft bei Motorstillstand eine Kaltstarthilfe (6) im Ansaugkanal (5) angeordnet ist und
wobei die Brennkraftmaschine (3) wenigstens einen Arbeitszylinder (3), welcher jeweils wenigstens ein Einlassventil, das mit dem Ansaugkanal (5) in Verbindung steht, und wenigstens ein Auslassventil, das mit einer Abgasanlage in Verbindung steht, aufweist, sowie eine Einrichtung (1, 8) zum Einstellen einer Ventilstellung umfasst und mit einer elektromotorisch betreibbaren Aufladeeinrichtung (10) aufladbar ist;
wobei bei dem Verfahren nach Erkennen (S1) eines Kaltstarts der Brennkraftmaschine (3) die folgenden Schritte durchgeführt werden:
Aktivieren der Kaltstarthilfe im Motorstillstand (S2);
Aktivieren eines elektromotorischen Betriebs der Aufladeeinrichtung (S3); und
Einstellen einer Ventilüberschneidung (S4) zwischen wenigstens einem Einlassventil und wenigstens einem Auslassventil eines Arbeitszylinders (30), um zumindest einen Teil der von der Aufladeeinrichtung (10) geförderten und durch die Kaltstarthilfe vorgewärmten Ladeluft direkt in die Abgasanlage zu fördern.

2. Verfahren nach Anspruch 1, **dadurch gekennzeichnet,**
(a) **dass** die elektromotorisch betreibbare Aufladeeinrichtung ein elektromotorisch unterstützter Abgasturbolader (10) ist; oder
(b) **dass** die elektromotorisch betreibbare Aufladeeinrichtung ein elektrischer Verdichter ist.

3. Verfahren nach einem der vorhergehenden Ansprüche, **dadurch gekennzeichnet, dass** die Kaltstarthilfe (6) eine Flammstarteinrichtung oder eine Glühvorrichtung wie z.B. ein Glühstift oder Glühgitter ist.

4. Verfahren nach einem der vorhergehenden Ansprüche, **dadurch gekennzeichnet,**
(a) **dass** die Einrichtung (1, 8) zum Einstellen der Ventilstellung eingerichtet ist, wenigstens eine vorbestimmte Winkelposition der Kurbelwelle (7) einzustellen, die die Ventilüberschneidung erzeugt und die hierzu einen Startermotor der Brennkraftmaschine oder einen Kurbelwellenstartergenerator (8) ansteuert; oder
(b) **dass** der Ventiltrieb der Brennkraftmaschine als elektromagnetischer Ventiltrieb ausgeführt ist, der von der Einrichtung zum Einstellen der Ventilstellung angesteuert wird, um die Ventilüberschneidung einzustellen; oder
(c) **dass**, falls die Brennkraftmaschine mit mindestens zwei Nockenwellen und mindestens einem Nockenwellenphasensteller ausgerüstet ist, mindestens einer der Nockenwellen-Phasensteller derart angesteuert wird, die Ventilüberschneidung zu vergrößern.

5. Verfahren nach einem der vorhergehenden Ansprüche, **dadurch gekennzeichnet, dass** im Schritt der Einstellung der Ventilüberschneidung die Ventilüberschneidung nacheinander für jeweils den oder die beim Anlassvorgang nächstzündenden Arbeitszylinder (30) eingestellt wird.

6. Verfahren nach einem der vorhergehenden Ansprüche, **dadurch gekennzeichnet, dass** die Brennkraftmaschine als Reihensechszylinder ausgeführt ist und im Schritt der Einstellung der Ventilüberschneidung (S4) die Kurbelwelle nacheinander dreimal um jeweils um 120 ° gedreht wird, um jeweils einen von zwei gleichlaufenden und beim Anlassvorgang nächstzündenden Arbeitszylinder (30) auf den oberen Ladungswechsel-Totpunkt (LWOT) einzustellen.

7. Verfahren nach einem der vorhergehenden Ansprüche, **dadurch gekennzeichnet, dass** im Schritt der Einstellung der Ventilüberschneidung (S4) eine langsame kontinuierliche Kurbelwellendrehung bei Motorstillstand erfolgt.

8. Verfahren nach einem der vorhergehenden Ansprüche, **dadurch gekennzeichnet, dass** die Brennkraftmaschine (3) selbstzündend arbeitet und insbesondere ein Dieselmotor ist.

9. Kraftfahrzeug, vorzugsweise Nutzfahrzeug, umfassend
eine Abgasnachbehandlungseinrichtung; eine im Ansaugkanal (5) angeordnete Kaltstarthilfe (6) zum Erwärmen der Ladeluft bei Motorstillstand; eine aufgeladene, vorzugsweise selbstzündende Brennkraftmaschine (3), mit wenigstens einem Arbeitszylinder (30), welcher jeweils wenigstens ein Einlassventil, das mit dem Ansaugkanal in Verbindung steht, und wenigstens ein Auslassventil, das mit einer Abgasanlage in Verbindung steht, aufweist; eine elektromotorisch betreibbare Aufladeeinrichtung (10) zum Aufladen der Brennkraftmaschine (3); eine Einrichtung zum Einstellen einer Ventilstellung der Arbeitszylinder (30) der Brennkraftmaschine (3); und
eine Steuereinrichtung (1) zur Kaltstartvorwärmung der aufgeladenen Brennkraftmaschine (3) und/oder der Abgasnachbehandlungseinrichtung bei Motorstillstand, die eingerichtet ist, das Verfahren nach einem der vorhergehenden Ansprüche 1 bis 8 durchzuführen.

## Claims

1. Method for cold-start pre-warming of a pressure-charged internal combustion engine (3) and/or of an exhaust gas aftertreatment device of a vehicle,
wherein a cold-starting aid (6) is arranged in the intake duct (5) for the purpose of warming the charge air while the engine is stationary, and
wherein the internal combustion engine (3) comprises at least one working cylinder (3), which in each case has at least one inlet valve, which is connected to the intake duct (5), and at least one outlet valve, which is connected to an exhaust system, and further comprises a device (1, 8) for setting a valve position, and can be pressure-charged by means of a pressure-charging device (10) that can be operated by electric motor;
wherein, in the method, the following steps are carried out after detection (S1) of a cold start of the internal combustion engine (3):
activation of the cold-starting aid while the engine is stationary (S2);
activation of electric-motor operation of the pressure-charging device (S3); and
setting of a valve overlap (S4) between at least one inlet valve and at least one outlet valve of a working cylinder (30) in order to deliver at least some of the charge air delivered by the pressure-charging device (10) and pre-warmed by the cold-starting aid directly into the exhaust system.

2. Method according to Claim 1, characterized (a) in that the pressure-charging device which can be operated by electric motor is an exhaust turbocharger (10) with electric motor assistance; or (b) in that the pressure-charging device which can be operated by electric motor is an electric compressor.

3. Method according to one of the preceding claims, **characterized in that** the cold-starting aid (6) is a flame-starting device or a glow-type device, such as a glow plug or glow grid.

4. Method according to one of the preceding claims, **characterized**
(a) **in that** the device (1, 8) for setting the valve position is designed to set at least one predetermined angular position of the crankshaft (7), which produces the valve overlap and which, for this purpose, activates a starter motor of the internal combustion engine or a crankshaft starter generator (8); or
(b) **in that** the valve gear of the internal combustion engine is embodied as electromagnetic valve gear, which is activated by the device for setting the valve position in order to set the valve overlap; or
(c) **in that**, if the internal combustion engine is equipped with at least two camshafts and at least one camshaft phase adjuster, at least one of the camshaft phase adjusters is activated in such a way as to increase the valve overlap.

5. Method according to one of the preceding claims, **characterized in that**, in the step of setting the valve overlap, the valve overlap is in each case set in succession for the next working cylinder or cylinders (30) to be ignited during the starting process.

6. Method according to one of the preceding claims, **characterized in that** the internal combustion engine is embodied as an in-line six-cylinder engine and, in the step of setting the valve overlap (S4), the crankshaft is turned three times in succession, in each case by 120°, in order in each case to set one of two synchronized working cylinders (30) that are the next to be ignited during the starting process to the charge-exchange top dead centre position (CETDC).

7. Method according to one of the preceding claims, **characterized in that**, in the step of setting the valve overlap (S4), a slow continuous crankshaft rotation takes place while the engine is stationary.

8. Method according to one of the preceding claims, **characterized in that** the internal combustion engine (3) operates with self-ignition and, in particular, is a diesel engine.

9. Motor vehicle, preferably a commercial vehicle, comprising
an exhaust gas aftertreatment device; a cold-starting aid (6), arranged in the intake duct (5), for warming the charge air while the engine is stationary; a pressure-charged, preferably self-ignition, internal combustion engine (3) having at least one working cylinder (30), which in each case has at least one inlet valve, which is connected to the intake duct, and at least one outlet valve, which is connected to an exhaust system; a pressure-charging device (10), which can be operated by electric motor, for pressure-charging the internal combustion engine (3); a device for setting a valve position of the working cylinders (30) of the internal combustion engine (3); and
a control device (1) for cold-start pre-warming of the pressure-charged internal combustion engine (3) and/or of the exhaust gas aftertreatment device while the engine is stationary, which control device is designed to carry out the method according to one of preceding Claims 1 to 8.

## Revendications

1. Procédé de préchauffage de démarrage à froid d'un moteur à combustion interne à suralimentation (3) et/ou d'un dispositif de post-traitement des gaz d'échappement d'un véhicule,
dans lequel, pour le chauffage de l'air de suralimentation à l'arrêt du moteur, un auxiliaire de démarrage à froid (6) est disposé dans le conduit d'admission (5) et
dans lequel le moteur à combustion interne (3) comprend au moins un cylindre de travail (3) qui présente à chaque fois au moins une soupape d'admission qui est en liaison avec le conduit d'admission (5), et au moins une soupape d'échappement qui est en liaison avec une installation de gaz d'échappement, ainsi qu'un dispositif (1, 8) pour ajuster une position des soupapes, et peut être suralimenté avec un dispositif de suralimentation (10) pouvant être entraîné par un moteur électrique ;
dans lequel, dans le procédé, après la détection (S1) d'un démarrage à froid du moteur à combustion interne (3), les étapes suivantes sont effectuées :
activation de l'auxiliaire de démarrage à froid à l'arrêt du moteur (S2) ;
activation d'un entraînement par moteur électrique du dispositif de suralimentation (S3) ; et ajustement d'un chevauchement des soupapes (S4) entre au moins une soupape d'admission et au moins une soupape d'échappement d'un cylindre de travail (30), afin de refouler directement dans l'installation de gaz d'échappement au moins une partie de l'air de suralimentation refoulé par le dispositif de suralimentation (10) et préchauffé par l'auxiliaire de démarrage à froid.

2. Procédé selon la revendication 1, **caractérisé en ce que**
(a) le dispositif de suralimentation pouvant être entraîné par un moteur électrique est un turbocompresseur à gaz d'échappement (10) assisté par un moteur électrique ; ou
(b) **en ce que** le dispositif de suralimentation pouvant être entraîné par un moteur électrique est un compresseur électrique.

3. Procédé selon l'une quelconque des revendications précédentes, **caractérisé en ce que** l'auxiliaire de démarrage à froid (6) est un dispositif de démarrage à flamme ou un dispositif de préchauffage à incandescence tel que par exemple un crayon incandescent ou une grille incandescente.

4. Procédé selon l'une quelconque des revendications précédentes, **caractérisé en ce que**
(a) le dispositif (1, 8) pour ajuster la position des soupapes est prévu pour ajuster au moins une position angulaire prédéterminée du vilebrequin (7), qui produit le chevauchement des soupapes et qui pour cela commande un moteur de démarreur du moteur à combustion interne ou un générateur de démarreur de vilebrequin (8) ; ou
(b) **en ce que** la commande des soupapes du moteur à combustion interne est réalisée sous forme de commande des soupapes électromagnétique qui est commandée par le dispositif pour ajuster la position des soupapes afin d'ajuster le chevauchement des soupapes ; ou
(c) **en ce que** si le moteur à combustion interne est muni d'au moins deux arbres à cames et d'au moins un dispositif de réglage d'arbre à cames, au moins l'un des dispositifs de réglage d'arbre à cames est commandé de telle sorte que le chevauchement des soupapes soit augmenté.

5. Procédé selon l'une quelconque des revendications précédentes, **caractérisé en ce qu'**à l'étape d'ajustement du chevauchement des soupapes, le chevauchement des soupapes est ajusté successivement à chaque fois pour le ou les cylindres de travail (30) devant être allumés successivement lors de l'opération de démarrage.

6. Procédé selon l'une quelconque des revendications précédentes, **caractérisé en ce que** le moteur à combustion interne est réalisé sous forme de moteur à six cylindres en ligne et à l'étape d'ajustement du chevauchement des soupapes (S4), le vilebrequin est tourné successivement trois fois à chaque fois de 120°, afin d'ajuster à chaque fois l'un de deux cylindres de travail (30) fonctionnant dans le même sens et devant être allumés successivement lors de l'opération de démarrage au point mort de changement de charge (LWOT).

7. Procédé selon l'une quelconque des revendications précédentes, **caractérisé en ce qu'**à l'étape d'ajustement du chevauchement des soupapes (S4), il se produit une rotation du vilebrequin continue et lente à l'arrêt du moteur.

8. Procédé selon l'une quelconque des revendications précédentes, **caractérisé en ce que** le moteur à combustion interne (3) fonctionne avec auto-allumage et notamment est un moteur diesel.

9. Véhicule automobile, de préférence véhicule utilitaire, comprenant
un dispositif de post-traitement des gaz d'échappement ; un auxiliaire de démarrage à froid (6) disposé dans le conduit d'admission (5) pour chauffer l'air de suralimentation à l'arrêt du moteur ; un moteur à combustion interne (3) à suralimentation, de préférence à auto-allumage, comprenant au moins un cylindre de travail (30) qui présente à chaque fois au moins une soupape d'admission qui est en liaison avec le conduit d'admission, et au moins une soupape d'échappement qui est en liaison avec une installation de gaz d'échappement ; un dispositif de suralimentation (10) pouvant être entraîné par un moteur électrique pour la suralimentation du moteur à combustion interne (3) ; un dispositif d'ajustement d'une position des soupapes des cylindres de travail (30) du moteur à combustion interne (3) ; et
un dispositif de commande (1) pour le préchauffage de démarrage à froid du moteur à combustion interne à suralimentation (3) et/ou du dispositif de post-traitement des gaz d'échappement à l'arrêt du moteur, qui est prévu pour mettre en oeuvre le procédé selon l'une quelconque des revendications précédentes 1 à 8.
